# EUROPEAN PATENT SPECIFICATION

(11) **EP 2 827 537 B1**
(45) Date of publication and mention of the grant of the patent: **06.04.2016**
(21) Application number: 13306026.9
(22) Date of filing: 17.07.2013
(51) Int. Cl.: H04L 29/06

(54) **FILTERING MESSAGES CONTAINING ILLEGALLY COPIED CONTENT OUT OF A TELECOMMUNICATION NETWORK**
FILTERUNG VON NACHRICHTEN MIT ILLEGAL VERVIELFÄLTIGTEM INHALT AUS EINEM TELEKOMMUNIKATIONSNETZWERK
FILTRAGE DES MESSAGES CONTENANT DES CONTENUS COPIÉS ILLÉGALEMENT HORS D'UN RÉSEAU DE TÉLÉCOMMUNICATION

(43) Date of publication of application: 21.01.2015
(73) Proprietor: ALCATEL LUCENT, 92100 Boulogne-Billancourt (FR)
(72) Inventor: Theeten, Bart Antoon Rika, 2018 Antwerp (BE); Van Raemdonck, Wolfgang, 2018 Antwerp (BE)
(74) Representative: Mouney, Jérôme

(56) References cited:
- EP-A2- 2 157 726
- US-A1- 2001 046 069
- US-A1- 2006 239 503
- US-A1- 2013 091 582
- US-B1- 8 086 758

## Description

### FIELD OF THE INVENTION

The present invention pertains to the control of sensitive data in telecommunication networks. More particularly, the invention relates to a system for protecting content against illegal copy and distribution and for filtering messages containing illegally copied content that are to be sent and transported through a telecommunication network.

### BACKGROUND

With the ever increasing popularity of social media, privacy concerns are becoming more and more dramatic. Social networking services allow people to upload content (pictures, movies), making this content available to other people (friends). These friends can then comment and share this content further with their friends, and so on.

Multi-media content can be protected by encrypting it and using dedicated (secure) players to render this encrypted content. This is much like how Digital rights management (DRM) works today. These dedicated players will not allow copying or further sharing the content being rendered. However, once the content is displayed on a screen, screen scraping can be done to reproduce the content (e.g. taking a picture of the screen, performing a screendump, etc.). Once copied this way, the copy can be shared online, hence by-passing copy-protections included in the original content.

There is a need to filter pirated copies of content out of the telecommunication network.

A prior art method for copy protection using embedded watermarks is known from US 2013/0091852 A1.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for protecting content against illegal copy and distribution within a telecommunication network, comprising the following steps in a controlling device:
receiving a request from a user terminal, the request containing a content,
calculating a unique value of at least a fragment of the content,
encrypting the unique value with an encryption key into an encrypted unique value,
generating a digital watermark corresponding to the encrypted unique value and embedding the digital watermark in the content, said digital watermark being obtained using a robust watermarking algorithm, encoding a decryption key associated with the encryption key in another digital watermark and embedding said another digital watermark in the content, said another digital watermark being obtained using a non-robust watermarking algorithm,
sending a response to the user terminal, the response containing the content with the embedded digital watermarks.

Advantageously, the invention provides a solution to use watermarks embedded in original content to prove that content was not tampered with.

In an embodiment, the unique value is encrypted into an encrypted unique value using an asymmetric function.
In an embodiment, the unique value is derived from an MD5 hash of the content bits.

In an embodiment, the unique value is derived from a digital fingerprint of the content.

In an embodiment, the controlling device inserts a decryption key associated with the encryption key into metadata of the content that are included in the response.

One watermark uses a watermarking system that survives copying using for example screenscraping techniques, while the other watermark uses a technique that does not survive such copying. Both watermarks represent an asymmetric key. Filters in the network can scan such content, check for the required presence of an asymmetric key embedded in the two separate watermarks. Applying both keys on the (content or a portion thereof) yields proof that the content was not tampered with. It is a great advantage of this invention that checking whether content has been illegally reproduced can be done by simply analyzing the content itself. There is no need for calling out to an external service or database, which is subject to scalability issues.

The invention also pertains to a device for protecting content against illegal copy and distribution within a telecommunication network, the device comprising:
means for receiving a request from a user terminal, the request containing a content,
means for calculating a unique value of at least a fragment of the content,
means for encrypting the unique value with an encryption key into an encrypted unique value,
means for generating a digital watermark corresponding to the encrypted unique value and embedding the digital watermark in the content, the digital watermark being obtained using a robust watermarking algorithm,
means for encoding a decryption key associated with the encryption key in another digital watermark and embedding said another digital watermark in the content, said another digital watermark being obtained using a non-robust watermarking algorithm,
means for sending a response to the user terminal, the response containing the content with the embedded digital watermarks.

In one embodiment, the device further comprises means for detecting the presence of watermark in the content and for refusing further processing of the received request if a watermark is detected.

The invention also pertains to a server for protecting content against illegal copy and distribution within a telecommunication network, the server comprising:
means for intercepting a message sent from a user terminal to an application server, the message containing a content,
means for detecting a digital watermark embedded in the content, the digital watermark being obtained using a robust watermarking algorithm,
means for extracting a decryption key from another digital watermark embedded in the content, said another digital watermark being obtained using a non-robust watermarking algorithm.
means for calculating a value by applying a decryption key to decrypt the detected digital watermark,
means for calculating an expected value of at least a fragment of the content,
means for forwarding the message to the application server if the calculated value is equal to the expected value.

In one embodiment, the server further comprises means for blocking the message if the calculated value is not equal to the expected value.

In one embodiment, the server further comprises means for extracting the decryption key from metadata of the content.

The invention also pertains to a computer program capable of being implemented within a device, said program comprising instructions which, when the program is executed within said device, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for a network traffic inspection; and
- FIG. 2 is an algorithm of a method for protecting content against illegal copy and distribution within a telecommunication network according to one embodiment of the invention.

The same reference number represents the same element or the same type of element on all drawings.

### DESCRIPTION OF EMBODIMENTS

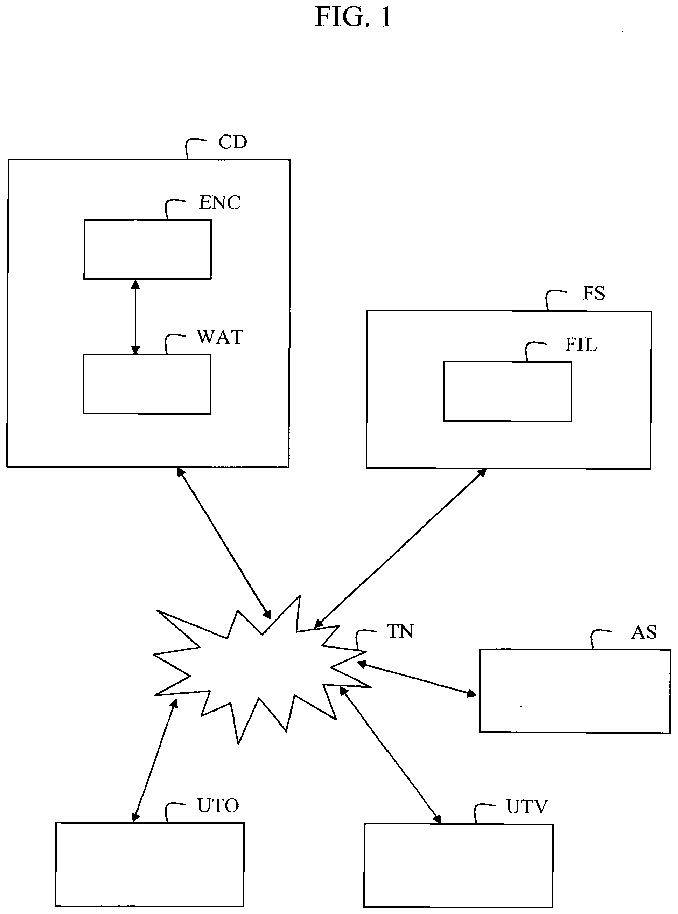

With reference to FIG. 1, a communication system according to the invention comprises a telecommunication network TN, a controlling device CD, a filter server FS, an application server AS, user terminal UTO of a content owner and a user terminal UTV of a content viewer, able to communicate between them through the telecommunication network.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

The application server AS represents the part of the business/corporation/social network platform, that can be accessed via a user terminal, connected to the telecommunication network. For instance, the application server AS stores content sent and posted by users in a social network website from their user terminals.

The content can be of any type, being for example under the form of an image file, an audio file, a video file or a text file.

For example, the user terminal UTO of the content owner or the user terminal UTV of the content viewer can be a mobile phone, a computer and a variety of other user equipments for communication.

The controlling device CD comprises an encryption module ENC and a watermark module WAT.

The controlling device CD can be included in the user terminal UTO of the owner of the content or in a server in the telecommunication network.

The encryption module ENC has functionality for calculating a unique value UV of a content or of one or more fragments of the content. The unique value can be derived from (but is not restricted to) an MD5 (message-digest algorithm) hash of the content bits or a digital fingerprint of the content.

The MD5 digest algorithm is a cryptographic hash function that produces a 128-bit (16-byte) hash value.

It is assumed that a fingerprinting algorithm is a procedure that maps an arbitrarily large data item (such as a computer file) to a shorter bit string, called a digital fingerprint, that uniquely identifies the original data.

The encryption module ENC encrypts the unique value UV with an encryption key K_Pr using an asymmetric function (such as public-private key encryption), yielding another value named EUV.

The watermark module WAT has functionality for generating a digital watermark DW of the encrypted unique value EUV. The digital watermark DW is obtained from a robust watermarking algorithm. It is assumed that a robust digital watermark embedded in a content survive alterations to the content.

The watermark module WAT is able to embed the digital watermark DW in the content, without detrimental effects on the content itself (i.e. invisible or hardly visible to the human eye).

The filter server FS contains a filter module FIL that filters illegally copied content out of the network.

The filter module FIL is able to detect watermark inserted by the controlling device CD in a content.

In one embodiment, the filter server FS and the communication device have a contract relationship in order to share the watermarking algorithms out-of-band.

In another embodiment, the filter server FS is able to run different watermarking algorithms in order to detect the presence of watermarks in contents.

If the filter module FIL does not detect any watermark in a content, it means the content is not protected and the filter module lets the content through to its intended destination.

If the filter module FIL detects a watermark in a content, it means the content is protected and the filter module checks whether the content is original, by applying a public key to decrypt the embedded digital watermark.

If the public key is not present, the content is considered illegal and the message containing the content is blocked. If the public key is present, but decryption doesn't yield the unique value of the content (or content fragment), the content is considered illegal and the message is blocked. If the decryption does yield the expected value, the content is considered legal and passed through to the intended destination.

The filter module FIL calculates the unique value, using the same algorithm on the content bytes as used beforehand by the controlling device CD. It is assumed the algorithm used is known to both controlling device CD and the filter server FS.

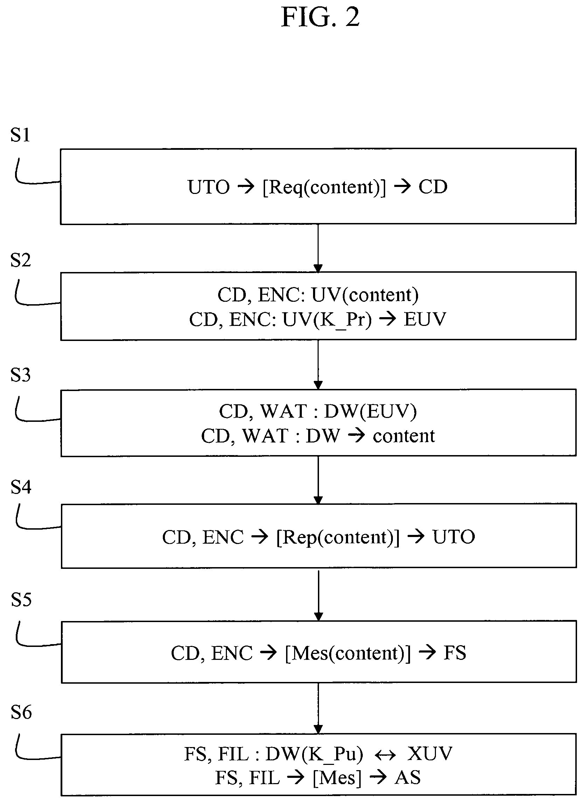

With reference to FIG. 2, a method for protecting content against illegal copy and distribution within f a telecommunication network according to one embodiment of the invention comprises steps S1 to S6 executed within the communication system.

In step S1, a user owning a content wishes to transfer content to a destination, e.g. a social network service or premium content provider hosted by the application server AS.

The content can be under the form of an image file, an audio file, a video file or a text file. The data can be sent through multiple messages.

Rather than sending the content in raw form to the destination, the user wants to make sure nobody can copy this content illegally and distribute that illegal copy any further.

The content owner sends a request Req from the user terminal UTO to the controlling device CD, the request Req containing the content to be protected.

In step S2, the encryption module ENC of the controlling device CD calculates a unique value UV of the content or of one or more fragments of the content.

The encryption module ENC encrypts the unique value UV with an encryption key K_Pr using an asymmetric function, into an encrypted unique value EUV.

In step S3, the watermark module WAT generates a digital watermark DW of the encrypted unique value EUV.

The watermark module WAT embeds the digital watermark DW in the content.

In step S4, the encryption module ENC sends a response Res to the user terminal UTO, the response Res containing the content with the embedded digital watermark DW.

Before the calculation of the unique value, the watermark module WAT detects whether a watermark is present in the content. If a watermark is detected, the watermark module WAT refuses further processing of the request Req, because it means that the content was already protected by a watermark. The controlling device CD has to prevent that illegally copied content containing the protection digital watermark can be overwritten by another digital watermark, containing another encrypted unique value

In step S5, the user terminal UTO sends a message Mes to the application server AS, via his/her access provider, the message comprising the content with the embedded digital watermark DW. The filter server FS intercepts the message Mes in order to analyze if it contains illegally copied content.

In a first embodiment, the encryption module ENC inserts a decryption key K_Pu associated with the encryption key K_Pr into the metadata of the content. The metadata are included in the response Res and in the message Mes.

In a second embodiment, the encryption module ENC collaborates with the watermarking module WAT to encode a decryption key K_Pu associated with the encryption key K_Pr in a second digital watermark DW2, using a non-robust watermarking algorithm so as to assure the public key doesn't survive alterations to the original content. The second digital watermark DW2 is embedded in the content.

In a third embodiment, the filter server FS and the communication device have a contract relationship in order to exchange a decryption key K_Pu associated with the encryption key K_Pr out-of-band. So the filter server FS knows the decryption key K_Pu beforehand.

In step S6, the filter module FIL analyzes the message Mes to detect if the content comprises a digital watermark.

If the filter module FIL does not detect any digital watermark embedded in the content, the filter module FIL forwards the message Mes to the application server AS.

If the filter module FIL detects the digital watermark DW embedded in the content, then it checks whether a decryption key is present in the message Mes.

In case the decryption key K_Pu is present in the message Mes according to the first embodiment, the filter module FIL extracts the decryption key K_Pu from the metadata of the content.

In case the decryption key K_Pu is present in the message Mes according to the second embodiment, the filter module FIL extracts the decryption key K_Pu from the second digital watermark DW2 embedded in the content.

If the decryption key K_Pu is not present in the message Mes, the content is considered illegal and the message is blocked.

If the decryption key K_Pu is present in the message Mes, the filter module FIL checks whether the content is original, by applying the decryption key K_Pu to decrypt the embedded digital watermark DW. The filter module FIL calculates an expected unique value XUV of the content or of one or more fragments of the content.

If the value obtained from the decryption of the embedded digital watermark DW is equal to the expected unique value XUV, the content is considered legal and the filter server FS forwards the message to the application server AS.

If the value obtained from the decryption of the embedded digital watermark DW is not equal to the expected unique value XUV, the content is considered illegal and the filter server FS blocks the message.

The content is then protected from illegal copy from a malicious user as explained hereinafter.

The malicious user requests the application server to view the content from the user terminal UTV. The application server allows viewing only via a secure renderer/player. This player has restricted capabilities, which prevents a user from accessing (and hence copying) the raw content bytes. The application server sends the content to a secure player/renderer running e.g. in the user terminal's browser as a plugin. The secure player/renderer sends the content for displaying it on the user terminal's screen. As the malicious user cannot copy the original content (no access to the raw bytes), the malicious user needs to use other means, such as e.g. screen dumping or taking a picture or movie with a (digital) camera of the displayed content, in case the content is a video file.

Next, the malicious user wants to distribute the pirated content. The robust watermarking technique assures the watermark is still present in the pirated content. However, the public decryption key will not be available in case of the first and second embodiments. But even if the public decryption key is available, the filter server will detect that the unique value (e.g. MD5 hash) of the pirated content obtained with the decryption key is different from the expected unique value of the original content and block the content from reaching its intended destination. The malicious user has no other means than to distribute the pirated content in person, i.e. not over the internet, so that the viral aspect of distributing illegal content is broken

The invention described here relates to a method and a device for protecting content against illegal copy and distribution within a telecommunication network. According to one implementation of the invention, the steps of the invention are determined by the instructions of a computer program incorporated into a device, such as the controlling device. The program comprises program instructions which, when said program is loaded and executed within the device, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for protecting content against illegal copy and distribution within a telecommunication network (TN), comprising the following steps in a controlling device (CD):
receiving (S1) a request (Req) from a user terminal (UTO), the request containing a content,
calculating (S2) a unique value (UV) of at least a fragment of the content,
encrypting (S2) the unique value (UV) with an encryption key (K_Pr) into an encrypted unique value (EUV),
generating (S3) a digital watermark (DW) corresponding to the encrypted unique value (EUV) and embedding the digital watermark (DW) in the content, said digital watermark (DW) being obtained using a robust watermarking algorithm,
encoding a decryption key (K_Pu) associated with the encryption key (K_Pr) in another digital watermark (DW2) and embedding said another digital watermark (DW2) in the content, said another digital watermark (DW2) being obtained using a non-robust watermarking algorithm,
sending (S4) a response (Res) to the user terminal (UTO), the response containing the content with the embedded digital watermarks.

2. A method according to claim 1, whereby the unique value (UV) is encrypted into an encrypted unique value using an asymmetric function.

3. A method according to claim 1 or 2, whereby the unique value is derived from an MD5 hash of the content bits.

4. A method according to any of claims 1 to 3, whereby the controlling device (CD) inserts a decryption key (K_Pu) associated with the encryption key (K_Pr) into metadata of the content that are included in the response (Res).

5. A device (CD) for protecting content against illegal copy and distribution within a telecommunication network (TN), the device comprising:
means (ENC) for receiving a request (Req) from a user terminal (UTO), the request containing a content,
means (ENC) for calculating a unique value (UV) of at least a fragment of the content,
means (ENC) for encrypting the unique value (UV) with an encryption key (K_Pr) into an encrypted unique value (EUV),
means (WAT) for generating a digital watermark (DW) corresponding to the encrypted unique value (EUV) and embedding the digital watermark (DW) in the content, the digital watermark (DW) being obtained using a robust watermarking algorithm,
means (WAT) for encoding a decryption key (K_Pu) associated with the encryption key (K_Pr) in another digital watermark (DW2) and embedding said another digital watermark (DW2) in the content, said another digital watermark (DW2) being obtained using a non-robust watermarking algorithm,
means (ENC) for sending a response (Res) to the user terminal (UTO), the response containing the content with the embedded digital watermarks.

6. A device (CD) according to claim 5, further comprising means (WAT) for detecting the presence of watermark in the content and for refusing further processing of the received request (Req) if a watermark is detected.

7. A server (FS) for protecting content against illegal copy and distribution within a telecommunication network (TN), the server comprising:
means (FIL) for intercepting a message (Mes) sent from a user terminal (UTO) to an application server (AS), the message containing a content,
means (FIL) for detecting a digital watermark (DW) embedded in the content, the digital watermark (DW) being obtained using a robust watermarking algorithm,
means (FIL) for extracting a decryption key (K_Pu) from another digital watermark (DW2) embedded in the content, said another digital watermark (DW2) being obtained using a non-robust watermarking algorithm,
means (FIL) for calculating a value by applying the decryption key (K_Pu) to decrypt the detected digital watermark (DW),
means (FIL) for calculating an expected value (XUV) of at least a fragment of the content,
means (FIL) for forwarding the message (Mes) to the application server (AS) if the calculated value is equal to the expected value (XUV).

8. A server (FS) according to claim 7, further comprising means (FIL) for blocking the message (Mes) if the calculated value is not equal to the expected value.

9. A server (FS) according to claim 7 or 8, further comprising means (FIL) for extracting the decryption key (K_Pu) from metadata of the content.

10. A computer program capable of being implemented within a device (CD) for protecting content against illegal copy and distribution within a telecommunication network (TN), said program comprising instructions which, when the program is loaded and executed within said device, carry out the following steps:
receiving (S1) a request (Req) from a user terminal (UTO), the request containing a content,
calculating (S2) a unique value (UV) of at least a fragment of the content,
encrypting (S2) the unique value (UV) with an encryption key (K_Pr) into an encrypted unique value (EUV),
generating (S3) a digital watermark (DW) corresponding to the encrypted unique value (EUV) and embedding the digital watermark (DW) in the content, the digital watermark (DW) being obtained using a robust watermarking algorithm,
encoding a decryption key (K_Pu) associated with the encryption key (K_Pr) in another digital watermark (DW2) and embedding said another digital watermark (DW2) in the content, said another digital watermark (DW2) being obtained using a non-robust watermarking algorithm,
sending (S4) a response (Res) to the user terminal (UTO), the response containing the content with the embedded digital watermarks.

## Patentansprüche

1. Verfahren zum Schutz von Inhalten gegen illegales Kopieren und Verbreiten in einem Telekommunikationsnetzwerk (TN), in einer Steuereinheit (CD) die folgenden Schritte umfassend:
den Empfang (S1) einer Anfrage (Req) von einem Benutzerendgerät (UTO), wobei die Anfrage einen Inhalt umfasst,
das Berechnen (S2) eines eindeutigen Werts (UV) von mindestens einem Fragment des Inhalts,
das Verschlüsseln (S2) des eindeutigen Werts (UV) mit einem Verschlüsselungscode (K_Pr) in einem verschlüsselten eindeutigen Wert (EUV),
das Generieren (S3) eines digitalen Wasserzeichens (DW), das dem verschlüsselten eindeutigen Wert (EUV) entspricht, und das Einbetten des digitalen Wasserzeichens (DW) in den Inhalt, wobei besagtes digitales Wasserzeichen (DW) unter Verwendung eines robusten Wasserzeichen-Algorithmus erzeugt wird.
das Codieren eines Entschlüsselungscodes (K_Pu), der in einem weiteren digitalen Wasserzeichen (DW2) dem Verschlüsselungscode (K_Pr) zugeordnet ist, und das Einbetten besagten weiteren digitalen Wasserzeichens (DW2) in den Inhalt, wobei besagtes weiteres digitales Wasserzeichen (DW2) unter Verwendung eines fragilen Wasserzeichen-Algorithmus erzeugt wird,
das Senden (S4) einer Antwort (Response, Res) an das Benutzerendgerät (UTO), wobei die Antwort den Inhalt mit den eingebetteten digitalen Wasserzeichen enthält.

2. Verfahren nach Anspruch 1, wobei der eindeutige Wert (UV) unter Verwendung einer asymmetrischen Funktion in einem verschlüsselten eindeutigen Wert verschlüsselt wird.

3. Verfahren nach Anspruch 1 oder 2, wobei der eindeutige Wert über eine MD5-Hashfunktion von den Inhalts-Bits abgeleitet wird.

4. Verfahren nach einem beliebigen der Ansprüche 1 bis 3, wobei die Steuereinheit (CD) einen dem Verschlüsselungscode (K_Pr) zugeordneten Entschlüsselungscode (K_Pu) in die Metadaten des Inhalts einfügt, die in der Antwort (Res) enthalten sind.

5. Einheit (CD) zum Schutz von Inhalten gegen illegales Kopieren und Verbreiten in einem Telekommunikationsnetzwerk (TN), wobei die Einheit umfasst:
Mittel (ENC) für den Empfang einer Anfrage (Req) von einem Benutzerendgerät (UTO), wobei die Anfrage einen Inhalt umfasst,
Mittel (ENC) für das Berechnen eines eindeutigen Werts (UV) von mindestens einem Fragment des Inhalts,
Mittel (ENC) für das Verschlüsseln des eindeutigen Werts (UV) mit einem Verschlüsselungscode (K_Pr) in einem verschlüsselten eindeutigen Wert (EUV),
Mittel (WAT) für das Generieren eines digitalen Wasserzeichens (DW), das dem verschlüsselten eindeutigen Wert (EUV) entspricht, und das Einbetten des digitalen Wasserzeichens (DW) in den Inhalt, wobei besagtes digitales Wasserzeichen (DW) unter Verwendung eines robusten Wasserzeichen-Algorithmus erzeugt wird,
Mittel (WAT) für das Codieren eines Entschlüsselungscodes (K_Pu), der in einem weiteren digitalen Wasserzeichen (DW2) dem Verschlüsselungscode (K_Pr) zugeordnet ist, und das Einbetten besagten weiteren digitalen Wasserzeichens (DW2) in den Inhalt, wobei besagtes weiteres digitales Wasserzeichen (DW2) unter Verwendung eines fragilen Wasserzeichen-Algorithmus erzeugt wird,
Mittel (ENC) für das Senden einer Antwort (Res) an das Benutzerendgerät (UTO), wobei die Antwort den Inhalt mit den eingebetteten digitalen Wasserzeichen enthält.

6. Einheit (CD) nach Anspruch 5, weiterhin Mittel (WAT) für das Feststellen des Vorhandenseins von Wasserzeichen in dem Inhalt und für das Verweigern einer weiteren Bearbeitung der erhaltenen Anfrage (Req) umfassend, wenn ein Wasserzeichen festgestellt wird.

7. Server (FS) zum Schutz von Inhalten gegen illegales Kopieren und Verbreiten in einem Telekommunikationsnetzwerk (TN), wobei der Server umfasst:
Mittel (FIL) für das Abfangen einer von einem Benutzerendgerät (UTO) an einen Anwendungsserver (AS) gesendeten Nachricht (Mes), wobei die Nachricht einen Inhalt umfasst,
Mittel (FIL) für das Feststellen eines digitalen Wasserzeichens (DW), das in einen Inhalt eingebettet ist, wobei das digitale Wasserzeichen (DW) unter Verwendung eines robusten Wasserzeichen-Algorithmus erzeugt wird,
Mittel (FIL) für das Extrahieren eines Entschlüsselungscodes (K_Pu) aus einem weiteren digitalen Wasserzeichen (DW2), das in den Inhalt eingebettet ist, wobei besagtes weiteres digitales Wasserzeichen (DW2) unter Verwendung eines fragilen Wasserzeichen-Algorithmus erzeugt wird,
Mittel (FIL) für das Berechnen eines Werts durch die Verwendung des Entschlüsselungscodes (K_Pu) zur Entschlüsselung des festgestellten digitalen Wasserzeichens (DW),
Mittel (FIL) für das Berechnen eines erwarteten Werts (XUV) von mindestens einem Fragment des Inhalts,
Mittel (FIL) für das Weiterleiten der Nachricht (Mes) an den Anwendungsserver (AS), wenn der berechnete Wert gleich dem erwarteten Wert (XUV) ist.

8. Server (FS) nach Anspruch 7, weiterhin Mittel (FIL) für das Blockieren der Nachricht (Mes) umfassend, wenn der berechnete Wert nicht gleich dem erwarteten Wert ist.

9. Ein Server (FS) nach Anspruch 7 oder 8, weiterhin Mittel (FIL) für das Extrahieren des Entschlüsselungscodes (K_Pu) aus Metadaten des Inhalts umfassend.

10. Computerprogramm, das dafür ausgelegt ist, um in eine Einheit (CD) zum Schutz von Inhalten gegen illegales Kopieren und Verbreiten in einem Telekommunikationsnetzwerk (TN) implementiert zu werden, wobei besagtes Programm Anweisungen umfasst, welche dann, wenn das Programm in besagter Einheit geladen und ausgeführt wird, die folgenden Schritte ausführen:
Empfang (S1) einer Anfrage (Req) von einem Benutzerendgerät (User Terminal, UTO), wobei die Anfrage einen Inhalt umfasst,
Berechnen (S2) eines eindeutigen Werts (UV) von mindestens einem Fragment des Inhalts,
Verschlüsseln (S2) des eindeutigen Werts (UV) mit einem Verschlüsselungscode (K_Pr) in einem verschlüsselten eindeutigen Wert (EUV),
Generieren (S3) eines digitalen Wasserzeichens (DW), das dem verschlüsselten eindeutigen Wert (EUV) entspricht, und das Einbetten des digitalen Wasserzeichens (DW) in den Inhalt, wobei das digitale Wasserzeichen (DW) unter Verwendung eines robusten Wasserzeichen-Algorithmus erzeugt wird.
Codieren eines Entschlüsselungscodes (K_Pu), der in einem weiteren digitalen Wasserzeichen (DW2) dem Verschlüsselungscode (K_Pr) zugeordnet ist, und das Einbetten besagten weiteren digitalen Wasserzeichens (DW2) in den Inhalt, wobei besagtes weiteres digitales Wasserzeichen (DW2) unter Verwendung eines fragilen Wasserzeichen-Algorithmus erzeugt wird,
das Senden (S4) einer Antwort (Res) an das Benutzerendgerät (UTO), wobei die Antwort den Inhalt mit den eingebetteten digitalen Wasserzeichen enthält.

## Revendications

1. Procédé de protection du contenu contre la copie et la distribution illégales au sein d'un réseau de télécommunication (TN), comprenant les étapes suivantes dans un dispositif de commande (CD) :
recevoir (S1) une demande (Req) de la part d'un terminal d'utilisateur (UTO), la demande contenant un contenu,
calculer (S2) une valeur unique (UV) d'au moins un fragment du contenu,
crypter (S2) la valeur unique (UV) avec une clé de cryptage (K_Pr) en une valeur unique cryptée (EUV),
générer (S3) un filigrane numérique (DW) correspondant à la valeur unique cryptée (EUV) et incorporer le filigrane numérique (DW) dans le contenu, ledit filigrane numérique (DW) étant obtenu en utilisant un algorithme générateur de filigranes robuste,
coder une clé de décryptage (K_Pu) associée à la clé de cryptage (K_Pr) dans un autre filigrane numérique (DW2) et incorporer ledit autre filigrane numérique (DW2) dans le contenu, ledit autre filigrane numérique (DW2) étant obtenu en utilisant un algorithme générateur de filigranes non robuste,
envoyer (S4) une réponse (Res) au terminal d'utilisateur (UTO), la réponse contenant le contenu avec les filigranes numériques incorporés.

2. Procédé selon la revendication 1, selon lequel la valeur unique (UV) est cryptée en une valeur unique cryptée en utilisant une fonction asymétrique.

3. Procédé selon la revendication 1 ou 2, selon lequel la valeur unique est dérivée d'un hachage MD5 des bits du contenu.

4. Procédé selon l'une quelconque des revendications 1 à 3, selon lequel le dispositif de commande (CD) insère une clé de décryptage (K_Pu) associée à la clé de cryptage (K_Pr) dans les métadonnées du contenu qui sont incluses dans la réponse (Res).

5. Dispositif (CD) de protection du contenu contre la copie et la distribution illégales au sein d'un réseau de télécommunication (TN), le dispositif comprenant :
des moyens (ENC) pour recevoir une demande (Req) de la part d'un terminal d'utilisateur (UTO), la demande contenant un contenu,
des moyens (ENC) pour calculer une valeur unique (UV) d'au moins un fragment du contenu,
des moyens (ENC) pour crypter la valeur unique (UV) avec une clé de cryptage (K_Pr) en une valeur unique cryptée (EUV),
des moyens (WAT) pour générer un filigrane numérique (DW) correspondant à la valeur unique cryptée (EUV) et incorporer le filigrane numérique (DW) dans le contenu, le filigrane numérique (DW) étant obtenu en utilisant un algorithme générateur de filigranes robuste,
des moyens (WAT) pour coder une clé de décryptage (K_Pu) associée à la clé de cryptage (K_Pr) dans un autre filigrane numérique (DW2) et incorporer ledit autre filigrane numérique (DW2) dans le contenu, ledit autre filigrane numérique (DW2) étant obtenu en utilisant un algorithme générateur de filigranes non robuste,
des moyens (ENC) pour envoyer une réponse (Res) au terminal d'utilisateur (UTO), la réponse contenant le contenu avec les filigranes numériques incorporés.

6. Dispositif (CD) selon la revendication 5, comprenant en outre des moyens (WAT) pour détecter la présence d'un filigrane dans le contenu et pour refuser un traitement subséquent de la demande (Req) reçue si un filigrane est détecté.

7. Serveur (FS) de protection du contenu contre la copie et la distribution illégales au sein d'un réseau de télécommunication (TN), le serveur comprenant :
des moyens (FIL) pour intercepter un message (Mes) envoyé depuis un terminal d'utilisateur (UTO) à un serveur d'application (AS), le message contenant un contenu,
des moyens (FIL) pour détecter un filigrane numérique (DW) incorporé dans le contenu, le filigrane numérique (DW) étant obtenu en utilisant un algorithme générateur de filigranes robuste,
des moyens (FIL) pour extraire une clé de décryptage (K_Pu) d'un autre filigrane numérique (DW2) incorporé dans le contenu, ledit autre filigrane numérique (DW2) étant obtenu en utilisant un algorithme générateur de filigranes non robuste,
des moyens (FIL) pour calculer une valeur en appliquant la clé de décryptage (K_Pu) pour décrypter le filigrane numérique (DW) détecté,
des moyens (FIL) pour calculer une valeur attendue (XUV) d'au moins un fragment du contenu
des moyens (FIL) pour transférer le message (Mes) au serveur d'application (AS) si la valeur calculée est égale à la valeur attendue (XUV).

8. Serveur (FS) selon la revendication 7, comprenant en outre des moyens (FIL) pour bloquer le message (Mes) si la valeur calculée n'est pas égale à la valeur attendue.

9. Serveur (FS) selon la revendication 7 ou 8, comprenant en outre des moyens (FIL) pour extraire la clé de décryptage (K_Pu) des métadonnées du contenu.

10. Programme informatique capable d'être mis en oeuvre à l'intérieur d'un dispositif (CD) de protection du contenu contre la copie et la distribution illégales au sein d'un réseau de télécommunication (TN), ledit programme comprenant des instructions qui, lorsque le programme est chargé et exécuté dans ledit dispositif, mettent en oeuvre les étapes suivantes :
recevoir (S1) une demande (Req) de la part d'un terminal d'utilisateur (UTO), la demande contenant un contenu,
calculer (S2) une valeur unique (UV) d'au moins un fragment du contenu,
crypter (S2) la valeur unique (UV) avec une clé de cryptage (K_Pr) en une valeur unique cryptée (EUV),
générer (S3) un filigrane numérique (DW) correspondant à la valeur unique cryptée (EUV) et incorporer le filigrane numérique (DW) dans le contenu, le filigrane numérique (DW) étant obtenu en utilisant un algorithme générateur de filigranes robuste,
coder une clé de décryptage (K_Pu) associée à la clé de cryptage (K_Pr) dans un autre filigrane numérique (DW2) et incorporer ledit autre filigrane numérique (DW2) dans le contenu, ledit autre filigrane numérique (DW2) étant obtenu en utilisant un algorithme générateur de filigranes non robuste,
envoyer (S4) une réponse (Res) au terminal d'utilisateur (UTO), la réponse contenant le contenu avec les filigranes numériques incorporés.
